(19) **Europäisches Patentamt**

**European Patent Office**

**Office européen des brevets**

(11) **EP 3 901 859 A1**

(12) **EUROPEAN PATENT APPLICATION**

(43) Date of publication:
**27.10.2021 Bulletin 2021/43**

(51) Int Cl.:
**G06Q 10/04** *(2012.01)*       **G06Q 50/28** *(2012.01)*

(21) Application number: **20170891.4**

(22) Date of filing: **22.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Volocopter GmbH**
**76646 Bruchsal (DE)**

(72) Inventors:
• **Adolf, Florian-Michael**
  **60486 Frankfurt (Main) (DE)**
• **Ortlieb, Markus**
  **76227 Karlsruhe (DE)**
• **Ciarambino, Marco**
  **69115 Heidelberg (DE)**

(74) Representative: **Lemcke, Brommer & Partner**
**Patentanwälte Partnerschaft mbB**
**Siegfried-Kühn-Straße 4**
**76135 Karlsruhe (DE)**

(54) **METHOD OF AND SYSTEM FOR OPERATING AN AIRCRAFT FOR ASSESSING OPERATIONAL RISK**

(57)     We propose a method of operating an aircraft (AC), in particular UAV, for assessing operational risk at a given position in space, comprising: dissimilarly acquiring (S1.1,...,S1.n) multiple heterogeneous geospatial data sets (DL1,...,DLn); deriving metrics for operational risk from each of said data sets(DL1,...,DLn), thus obtaining multiple corresponding geospatial risk layers (RL1,... RLn), by means of a respective risk model; storing said risk layers (RL1,...RLn) in a risk layer database (DB); accessing the risk layer database (DB) during aircraft operation planning and/or during actual aircraft operation to obtain a mission risk map (RMA); operating the aircraft (AC) based on risk information comprised in said mission risk map (RMA), preferably comprising minimizing a mission risk. We also propose a system for carrying out said method.

**Fig. 1**

EP 3 901 859 A1

**Description**

The invention relates to a method of operating an aircraft, in particular UAV (Unmanned Aerial Vehicle), for assessing operational risk at a given position in space, according to claim 1.

The invention further relates to a system for operating an aircraft, in particular UAV, for assessing operational risk at a given position in space, according to claim 13.

However, the invention is not limited to UAVs, but can be extended to passenger-carrying aircraft, which can be either piloted by a human pilot or by an automatic pilot (autopilot).

The invention is particularly useful in connection with multirotor VTOL (vertical take-off and landing) aircraft, which can be electrically powered, but is not limited thereto.

Prior art document US 2015/336668 A1 discloses a method of flight path planning for UAVs which chooses the most efficient flight path to get from a point A to a point B in three-dimensional space. Rudimentary guidelines for the evaluation of mission-specific risk are also provided in EASA (European Union Aviation Safety Agency) SORA (Specific Operation Risk Assessment) documents. In the context of the present invention, the term "mission" is used to describe a specific flight operation performed by a specific aircraft at a specific time and following a specific flight path.

Disadvantageously, the above-mentioned methods are dependent on certain predefined data sources and either do not include risk assessments at all or are limited to certain predefined scenarios. In this context, the term "risk assessment" as used in the present description comprises a dynamic evaluation of risks and hazards to life and/or property and/or environment that are linked with a particular aircraft operation or mission. It also includes risks to the mission (e.g., weather, no-fly zones, ...), the own aircraft and other aircraft. For instance, it may be more risk-full to fly over a given geographical area during rush-hour than on weekends.

In contrast to the known methods, there is a need for an approach that is independent from specific data sources in order to provide dynamic, four-dimensional (including three spatial coordinates or dimensions and time) risk assessment for improved aircraft operation in terms of risk management.

This object is achieved by means of a method as defined in claim 1 and by means of a system as defined in claim 13. Advantageous further embodiments are defined in the sub-claims.

According to a first aspect of the invention, a method of operating an aircraft, in particular UAV, for assessing operational risk at a given position in space, comprises: dissimilarly acquiring multiple heterogeneous geospatial data sets; deriving metrics for operational risk from each of said data sets, thus obtaining multiple corresponding geospatial risk layers, by means of a respective risk model that optionally may include at least one of aircraft data and regulatory information on aircraft operation; storing said risk layers in a risk layer database; accessing the risk layer database, preferably automatically and repeatedly, during aircraft operation planning and/or during actual aircraft operation to obtain a mission risk map; operating the aircraft based on risk information comprised in said mission risk map, preferably comprising minimizing a mission risk.

According to a second aspect of the invention, a system for operating an aircraft, in particular UAV, for assessing operational risk at a given position in space, comprises: data acquisition means, in particular program interfaces and/or sensors, for dissimilarly acquiring multiple heterogeneous geospatial data sets; first data processing means for deriving metrics for operational risk from each of said data sets, thus obtaining multiple corresponding geospatial risk layers, by means of a respective risk model that preferably includes at least one of aircraft data and regulatory information on aircraft operation; a risk layer database for storing said risk layers in said risk layer database; second data processing means for, preferably, automatically and, preferably, repeatedly accessing the risk layer database during aircraft operation planning and/or during actual aircraft operation to obtain a mission risk map; aircraft operation means for operating the aircraft based on risk information comprised in said mission risk map, preferably comprising operating the aircraft to minimize mission risk.

A further development of said system further comprises at least one aircraft in communication connection at least with said database via said aircraft operation means.

Furthermore, the system can be adapted to perform the method according to any one of the preferred embodiments thereof.

In contrast to the above-mentioned prior art methods, the present approach, by dissimilarly (i.e., using different means and/or sources) acquiring multiple heterogeneous geospatial data sets, is independent from a particular data source and can include auto-generated data as well as mission-specific parameters and expert-knowledge to provide dynamic, four-dimensional risk assessments. In an embodiment, one can further augment the collected data (i.e., an individual data layer) with new information obtained from the joint analysis of multiple data layers.

In the present description, the term "data layer" refers to a set of data stemming from one source and/or describing one particular aspect of reality. The term "risk layer" refers to a data set that is derived from a given data layer by subjecting the data comprised in said data layer to a particular risk model (which involves said metrics for operational risk). Multiple data layers can be merged in a risk model, thus yielding risk layers, which inherit from more than one data layer. The data storage (risk layer database) preferably stores the risk layers, not the raw data that was used to obtain said risk layers.

The risk layers are stored in the risk layer database and can then be used for aircraft operation planning and/or during actual aircraft operation (mission planning). There are other use cases besides mission planning, e.g., evaluation of business cases, development of operational concepts, path planning, requirement validation, support of certification programs, planning of maintenance infrastructure, all linked to the operation of aircraft. In this context, the invention proposes the use of a mission risk map and operating the aircraft based on risk information comprised in said mission risk map, preferably comprising operating the aircraft to minimize mission risk.

The term "mission risk map" as used herein refers to a geospatial map that comprises risk assessment data in connection with a specific aircraft mission or operational concept.

Unmanned Aerial System (UAS) operations in Europe are possible under the so-called Open Category, Specific Category and - in future - Certified Category. The Specific Category is inherently coupled with the Specific Operation Risk Assessment (SORA) as Acceptable Means of Compliance (AMC). It comprises a qualitative assessment of ground and air risks into a mapping of harm and threat barriers. Similar considerations are foreseen for the Certified Category, which will be the certification basis for unmanned flight beyond visual line of sight (BVLOS) over congested areas. Where Specific Category operations must exclude high risks and may not require a more detailed level of information, it is a challenging task to refine the assessment within a high-risk environment for the Certified Category. However, in the Specific Category, too, it may be difficult to plan operations based on current simplifications, such that a refined risk-geodatabase for decision making, as proposed in the context of the present invention, becomes a crucial assessment tool.

The present approach preferably combines automatically retrieved, parsed and analysed information or data to generate the above-mentioned heterogeneous data sets from arbitrary sources. Furthermore, said data sets may be enhanced with manually generated knowledge from human experts. This can include the vehicle type (aircraft type) as well as mission specific parameters to provide comprehensive risk models. The present invention thus enables highly informed decision-making processes for Specific and Certified unmanned operations.

Moreover, the present approach has the potential to extend the methodology of existing AMCs like SORA to more fine-grained high-risk environments by providing a transparent and traceable mission planning process for such high-risk environments, i.e., a low certification barrier of the tools used can be achieved. The method described herein provides an approach for safe integration of UAS into the urban air space.

The method according to the present invention can offer risk-minimized operation with a modular data-driven approach. This can be achieved by building on dissimilarly acquired and heterogeneous geospatial data sets from which metrics for operational risk are derived. Aircraft and mission specific parameters as well as regulatory requirements can be modelled into each risk layer. In a corresponding embodiment of the invention, each risk model includes at least one of aircraft data and regulatory information on aircraft operation. This process allows for repeatable, precise, accurate and multi-dimensional models of risks associated with the intrinsic mission parameters and the vehicle's or aircraft's geometrical and performance characteristics. In the present description "vehicle" and "aircraft" are used as synonyms.

The present approach allows to integrate data layers from any origin, if pre-processed to a compatible format. This explicitly allows for the extension of auto-generated data sets with layers of expert knowledge. Any data layer can be inspected and corrected manually during the data set generation process, if necessary. In this context, an embodiment of the invention comprises that at least one additional risk layer or data layer is input and/or amended through an Interface for human input.

One can classify ground and air risk types as well as static and dynamic types according to the expected frequency of change. Such data layers may include air traffic, ground traffic, ground infrastructure, population, data of daily commute, the vehicle noise footprint, social media data, UTM orders, no-fly zones, ground events, large gatherings of people, weather data or nature reserves among many others. Accordingly, in an embodiment of the method, said data sets can include at least one of air traffic, ground traffic, ground infrastructure, population, data of daily commute, the vehicle noise footprint, social media data, UTM orders, no-fly zones, ground events, large gatherings of people, weather data or nature reserves. Furthermore, either the individual data sets or the risk layers derived therefrom can be manually and/or automatically updated at a respective update frequency, if required.

Furthermore, one can derive meta information from the union or combination (fusion) of multiple data layers, thus identifying, e.g., emergency landing sites from semantic aerial maps, geospatial and vegetation data. Therefore, in a corresponding embodiment of the method, meta information can derived from a union of a plurality of data layers and/or risk layers, e.g., for identifying emergency landing sites from semantic aerial maps, geospatial and vegetation data. Potential landing areas can be identified based on semantic classification of the terrain. These areas can be further analysed regarding terrain properties such as roughness, inclination or soil type and evaluated with respect to desired landing site specifications. Considering the geometrical properties of the vehicle, safe landing sites are identified and added to the respective data layer. By resorting on different data providers and, if the provider's data do not have the necessary safety confidence level, live survey, e.g., by means of sensors onboard the aircraft, it is possible to constantly update and integrate the most up to date information for such critical data layer.

In the database generation process, datasets can be collected via available APIs (Application Programming Interfaces) and/or manual user input. APIs use defined protocols to enable developers to build, connect and integrate applications quickly and at scale. Additionally, data about a specific vehicle (e.g., flight envelope, dynamic limits, payload-induced limits, range, reserves, properties of propulsion system, etc.), regulatory restrictions (e.g. applicable rules of the air/air law, no-fly zones, transmitter/radio mandatory zones) and the intended mission scope (e.g., distance, conditions at take-off/destination, cruise altitude, payload, etc.) can be collected and used. Accordingly, in an embodiment of the method, aircraft data include characteristic data about a specific aircraft, comprising at least one of flight envelope, dynamic limits, payload-induced limits, range, reserves, properties of propulsion system, and data in connection with an intended mission scope, comprising at least one of distance, conditions at take-off/destination, cruise altitude, payload; and said regulatory information include at least one of applicable rules of the air/air law, no-fly zones, transmitter/radio mandatory zones.

For example, the risk associated with losing jet fuel in the event of ground impact may be weighted differently over water surfaces than over residential areas. Similarly, the jet fuel related risk may decrease as the fuel is consumed by the aircraft over time. APIs to allow automatic airspace regulatory information retrieval are easily integrable in the process. Applicable data sets can be fused (combined) and processed to obtain meta information from the available data sets, as stated above.

Specific risk metrics are applied to each data layer (data set) individually to model the risk associated with each single layer. The actual risk model used (i.e., the cost function) may change with the data, for which it models the risk (for instance, the risk associated with population density will be modelled differently from the risk associated with a dump site for toxic waste). Following this process, one can obtain N (or n) three-dimensional risk models, where N (or n) is the number of applicable data layers. This yields a modular approach that allows to automatically update and inspect risk models individually according to their level of criticality and rate of change.

Throughout the process, human-readable data formats (e.g., xml, json, csv) can advantageously be used to facilitate inspection and/or certification. Accordingly, in an embodiment of the method at least said risk layers comprise (preferably exclusively) human readable data formats, such as, e.g., xml, json, csv (without limitation to these particular formats).

Different risk types can be weighted at runtime to obtain a comprehensive risk assessment, which is specific to the mission and operation. Weights can be dynamically changed to obtain the most relevant total risk assessment, depending on the mission scenario, the regulation and any other parameter that a user requires. Accordingly, in an embodiment of the method, individual risk layers are used in weighted form for obtaining said mission risk map by applying a, preferably adjustable, weighting factor in connection with each risk layer, preferably at runtime. This implies that said weighing factors may also change at runtime or during mission time, as stated above with respect to the jet fuel example.

Furthermore, the modular approach can be employed with arbitrary weight functions over any mission without having to regenerate the risk layer database.

Risk-based approaches towards certification and operation of air vehicles are, e.g., practiced under EASA SORA. The prior art process, however, is highly tedious and involves little quantitative assessment of the situation. The present application proposes, on the other hand, at least with certain embodiments, a novel method offering risk-minimized operation with a modular data-driven approach. This is achieved, as stated, by building on dissimilarly acquired and heterogeneous geospatial data sets from which metrics for operational risk can be derived. Aircraft and mission specific parameters as well as regulatory requirements can be modelled into each risk layer. This process allows for repeatable, precise, accurate and multi-dimensional models of risks associated with the intrinsic mission parameters and the vehicle's geometrical and performance characteristics.

Examples for mission specific risk modelling include, without limitation, an air taxi with/without passengers, a cargo drone with or without load, and high/low priority missions. Depending on the mission and the operation, different risks may be acceptable, or the risk may be computed differently (e.g., the passenger carrying air taxi may always have a higher risk weight on any risk concerning the aircraft itself than an (empty) cargo drone). Accordingly, in an embodiment of the method a risk weight for a particular aircraft is allocated based on at least one of aircraft type and aircraft function or mission characteristics, in particular a passenger-carrying aircraft having a higher risk weight on any risk concerning the aircraft itself than a non-passenger-carrying aircraft.

Examples for vehicle specific risk modelling include, without limitation, ground impact that scales with dimension and weight (or velocity) of the vehicle. Similarly, the performance (e.g., turn performance, climb rate, excess power) can define the criticality (and thereby an associated risk) of a potential failure in a certain situation. Accordingly, in an embodiment of the method a ground impact risk of an aircraft is scaled at least with dimension and weight of the aircraft.

Examples for regulation-specific risk modelling include, without limitation, granting of certain privileges to the operators of vehicles (aircraft) depending on the regulatory environment. The certification standard also implies certain safety standards towards which the vehicle or aircraft was designed. (e.g., consumer drone vs. commercial airliner).

In a preferred embodiment of the method a total operational risk of a three-dimensional position in space $p$ is assessed from the risk value of an individual risk layer $R_i$ at position $p$ and a dynamically adjustable array of risk weights

$w_i$, with

$$w_1 + w_2 + \ ... \ + w_{i-1} + w_i = 1$$

such that a total risk $R_{p,tot}$ at position $p$ involving risk layers 1, ..., $i$ amounts to

$$R_{p,tot} = R_{p,1}{}^{w_1} \cdot R_{p,2}{}^{w_2} \cdot \ ... \ \cdot R_{p,i-1}{}^{w_{i-1}} \cdot R_{p,i}{}^{w_i}$$

Note that while this particular embodiment uses weighted products, the present invention as such is not limited to any specific metric employed for risk assessment.

In particular, the present invention is not concerned with flight planning; it proposes a risk assessment of places/maps with various input data. The present approach could be included in the planning and validation of an operational concept for aircraft traffic for cities or regions or could help to build up maintenance infrastructure in a meaningful way.

The proposed method can be highly automated, yet it can use human-readable data types throughout the process to allow for inspection and interaction with (human) experts. These features are important for certification aspects. With human-readable data types and the option to manually inspect and/or interact, one can comply with certification considerations. The high degree of automation means that the method can provide an actual pipeline, from mission definition to risk assessment, without any user interference required, if the operator trusts the system.

In the scenario of a completely segregated airspace and a complete knowledge about the urban environment, a safe (essentially risk-free) flight trajectory might be computed manually, without the need of a dynamic automatic approach as proposed in the present application. Obviously, the operations would then be limited to the time of validity of the conditions that allowed the manual crafting of the trajectory. Moreover, such a system would intrinsically limit the number of possible concurrent flights, since the human workforce required would be impractical in a logistical and economic sense.

Further details and advantages of the invention will now be described with reference to exemplary embodiments as shown in the drawings.

Fig. 1 shows a risk modelling and map generation data flow;

Fig. 2 shows a superposition of multiple data layers to generate 3D risk models;

Fig. 3 shows an integration of risk models into the UAV system architecture; and

Fig. 4 shows a general database generation workflow.

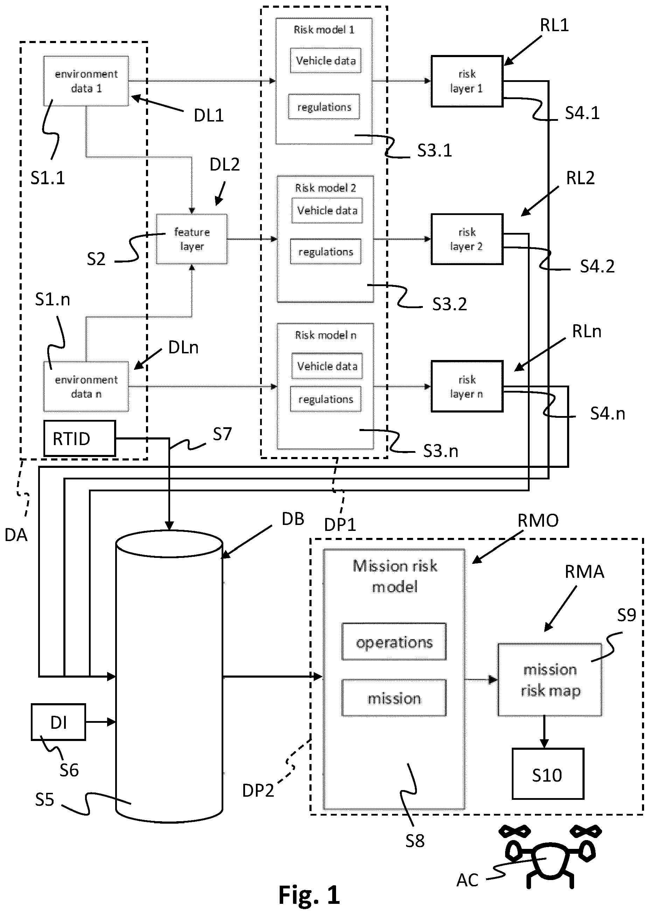

Fig. 1 illustrates risk modelling and map generation data flow which will generally be implemented by means of a data processing system comprising suitable data processing means, i.e., first data processing means DP1 and second data processing means DP2 (dashed boxes). Environmental data are dissimilarly acquired at step S1.1,...,S1.n, e.g., by means of suitable sensors or from other (external) data sources, as described above, through suitable data acquisition means DA (dashed box), to form individual data layers DL1,...DLn. Some of the data or data layers DL1, DLn can be combined (fused) to form a new data layer ("feature layer") at step S2, combining, e.g., topography and vegetation. Then, at step S3.1,...,S3.n, a respective risk model 1,...,n is applied to each data layer DL1,...,DLn, which comprises the use of both vehicle data ("vehicle data") and airspace traffic or other regulations ("regulations"). The outcome of this risk modelling are individual risk layers RL1,...,RLn at step S4.1,...,S4.n which risk layers are then stored in a risk layer database DB at step S5. Each risk layer RL1,...RLn in the data base DB can be updated individually. Some missions may not require a database update. Additional (manually generated) risk layers can be added to the data base DB by expert users at step S6 via a suitable database interface DI. The same applies to the data layers DL1,...,DLn (not shown).

The different risk layers RL1,...,RLn are calculated by the first data processing means DP1 and put into the database DB, where they can be updated (e.g., by real-time input data RTID, such as social media location data), as schematically illustrated at S7. At step S8, a mission risk model RMO, i.e., a corresponding data processing routine running on said second data processing means DP2, which comprises specific information about an aircraft mission and operations (starting point, destination, time and date, passengers, etc.), accesses the database DB. It produces, at step S9, a mission specific risk map RMA from at least some, preferably all of the risk layers RL1,...RLn by applying said risk layers RL1,...RLn to said specific information about an aircraft mission and operations. Risk map RMA is to be used for actual operation of an aircraft AC in step S10. It serves as an an input to any of the above-mentioned processes, e.g., planning and validation of an operational concept for aircraft traffic for cities or regions or building up maintenance infrastructure in a meaningful way. Depending on the function, the risk map RMA may be interpreted in many different ways. For instance, it can be interpreted as a discrete cost function or as a binary map, when certain thresholds are applied. Depending on the purpose of the underlying function, different conclusions may result.

The specific mission risk model RMO accesses only the database DB, not the raw data (i.e., data layers DL1,...DLn), which makes the whole process faster and less costly/complex. Step S10 is implemented via aircraft operation means (not shown) for operating the aircraft based on risk information comprised in said mission risk map RMA, preferably comprising operating the aircraft AC to minimize mission risk.

Manual input, as schematically depicted at S6, is not limited to database level (or risk layer RL1,...,RLn level), but could also occur at data level DL1,...,DLn. Any data can be (manually) added to the tool or system, as depicted in Fig. 1, as long as it complies with the data format employed. Preferably, the data is in human readable format, at least on risk level, i.e., from step S3.1,... onwards.

All (preferably normalized) risk layers RL1,... are stored in said database DB and can be updated independently and according to their respective change rate.

For different purposes, the actual merging process, where a comprehensive risk map RMA is computed from the individual risk layers RL1,..., at steps S8 and S9 may be implemented in various fashions. A comprehensive risk map RMA is merged (created) using the individual risk layers RL1,.... Depending on the application, the merging process will weight individual risks differently, i.e., a single merging process does not exist. However, the merging process happens within the mission risk model RMO, i.e., is not independent thereof.

We generally need to distinguish between generic risk models (as used in steps S3.1,...) which convert data into a risk, which is only specific to the underlying data, and the mission risk model (RMO, used at S10), which evaluates the risk associated with a mission based on the many risk layers generated in the previous steps.

Steps S8 to S10 have in common is that they are independent from the mission-level risk model that is used at steps S3.1,...,S3.n.

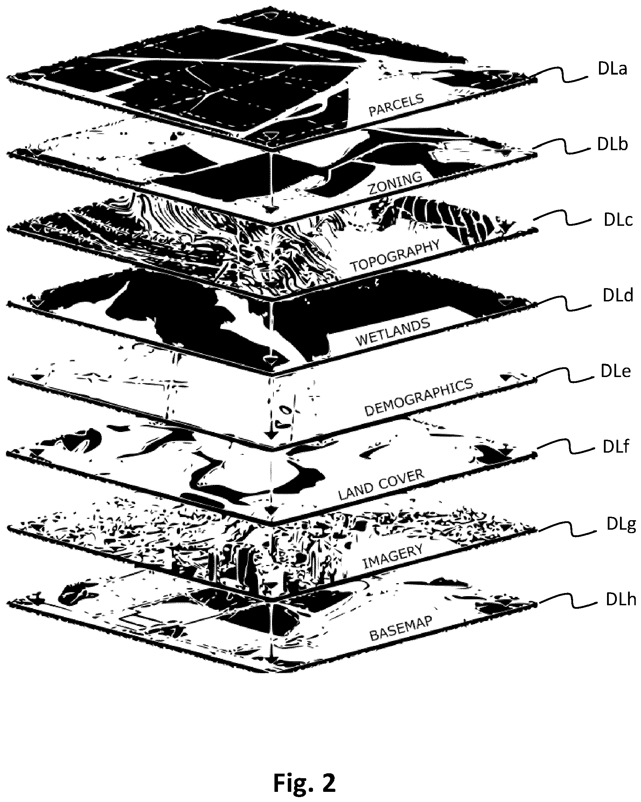

Fig. 2 illustrates the superposition of multiple data layers DLa through DLh (cf. the example of DL2 in Fig. 1) to generate a 3D (three-dimensional) risk model, i.e., a model which indicates a risk value or risk assessment for a given point in 3D space. However, the invention is not limited to three dimensions. According to Fig. 2, data regarding (geographic) parcels (i.e., administrative information) or zoning (e.g., postal area codes), topography data, wetlands data, demographic data, land cover data, and image data (at least some of which are 2D)are combined with basemap data to generate a new data layer that can then be used, together with vehicle data and regulatory data, in a specific risk model (cf. Fig. 1). An advantage of the proposed method consists in the ability to easily add further (or cancel) layers to provide the necessary safety assessment for decision making.

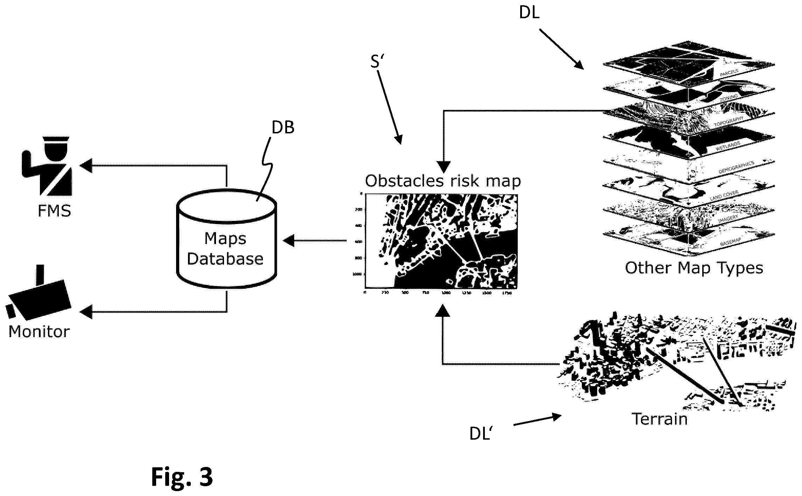

Fig. 3 illustrates the integration of risk models into a UAV system architecture comprising a Flight Management System FMS and an independent monitoring instance ("Monitor"). These entities access a maps database (cf. reference numeral DB and steps S8 to S10 in Fig. 1). Various geometrical and semantic data layers DL (cf. Fig. 2), DL' are projected and fused together at step S' to provide a complete risk map for path planning and decision making. Said integration of risk models takes place where the FMS and Monitor pull data from the database DB.

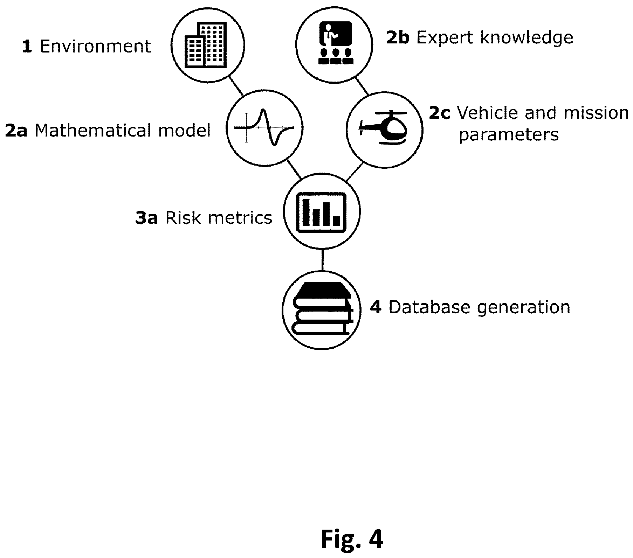

Fig. 4 shows the general database generation workflow, as already described above in connection with Fig. 1. By resorting on redundant and comprehensive automated data processing of environment data ① and mathematical modelling ②a) together with vehicle data ②c), plus human expertise ②b) (e.g., human input), the system enables, through application of risk metrics ③ the creation of a safe and convenient to use datasets ④ (cf. database DB in Fig. 1) of aerial urban operations according to the current local regulations. The term "mathematical model(ling)" refers to a machine-processable description of the environment. Mathematical models are one option, others are, e.g., empirical data or statistics; in a more general way this has been described as data layer above. As can be gathered from Fig. 4, risk metrics ③ comprise at least one of environmental data ①, in particular modified by means of at least one mathematical model ②a), expert knowledge ②b), and aircraft (vehicle) and mission parameters ②c).

## Claims

1. A method of operating an aircraft (AC), in particular UAV, for assessing operational risk at a given position in space, comprising:

   dissimilarly acquiring (S1.1,...,S1.n) multiple heterogeneous geospatial data sets (DL1,...,DLn);
   deriving metrics for operational risk from each of said data sets(DL1,...,DLn), thus obtaining multiple corresponding geospatial risk layers (RL1,... RLn), by means of a respective risk model;
   storing said risk layers (RL1,...RLn) in a risk layer database (DB);

accessing the risk layer database (DB) during aircraft operation planning and/or during actual aircraft operation to obtain a mission risk map (RMA);

operating the aircraft (AC) based on risk information comprised in said mission risk map (RMA), preferably comprising minimizing a mission risk.

2. The method of claim 1, wherein each risk layer (RL1,...,RLn) provides a three-dimensional data structure.

3. The method of claim 1 or 2, wherein each risk model includes at least one of aircraft data and regulatory information on aircraft operation.

4. The method of any one of claims 1 through 3, wherein the risk layer database (DB) is accessed automatically and, preferably, repeatedly.

5. The method of any one of claims 1 through 4, wherein said risk metrics comprise at least one of environmental data (①), in particular modified by means of at least one mathematical model (②a)), expert knowledge (②b)), and aircraft and mission parameters (②c)).

6. The method of any one of claims 1 through 5, wherein at least one of said risk layers (RL1,...,RLn) comprises human readable data formats, preferably comprises only human readable data formats, such as, e.g., xml, json, csv.

7. The method of any one of claims 1 through 6, wherein at least one additional risk layer is input and/or amended through an Interface (DI) for human input.

8. The method of any one of claims 1 through 7, wherein individual risk layers (RL1,...,RLn) are used in weighted form for obtaining said mission risk map by applying a, preferably adjustable, weighting factor, $w_i$, in connection with each risk layer (RL1,...,RLn), preferably at runtime.

9. The method of any one of claims 1 through 8, wherein a total operational risk of a three-dimensional position in space $p$ is assessed from the risk value of an individual risk layer $R_i$ at position $p$ and a dynamically adjustable array of risk weights $w_i$, with

$$w_1 + w_2 + \ldots + w_{i-1} + w_i = 1$$

such that a total risk $R_{p,tot}$ at position $p$ involving risk layers 1,..., $i$ amounts to

$$R_{p,tot} = R_{p,1}{}^{w_1} \cdot R_{p,2}{}^{w_2} \cdot \ldots \cdot R_{p,i-1}{}^{w_{i-1}} \cdot R_{p,i}{}^{w_i}$$

10. The method of any one of claims 1 through 9, wherein meta information is derived from a union of a plurality of data layers (DL1,...,DLn) and/or risk layers (RL1,... RLn), e.g., identifying emergency landing sites from semantic aerial maps, geospatial and vegetation data.

11. The method of any one of claims 1 through 10, wherein a risk weight for a particular aircraft (AC) is allocated based on at least one of aircraft type and aircraft function or mission characteristics, in particular a passenger-carrying aircraft has a higher risk weight on any risk concerning the aircraft itself than a non-passenger-carrying aircraft.

12. The method of any one of claims 1 through 11, wherein a ground impact risk of an aircraft (AC) is scaled with dimension and weight of the aircraft (AC).

13. A system for operating an aircraft (AC), in particular UAV, for assessing operational risk at a given position in space, comprising:

data acquisition means (DA), in particular program interfaces and/or sensors, for dissimilarly acquiring multiple heterogeneous geospatial data sets (DL1,...,DLn);
first data processing means (DP1) for deriving metrics for operational risk from each of said data sets(DL1,...,DLn), thus obtaining multiple corresponding geospatial risk layers (RL1,...,RLn), by means of a respective risk model that preferably includes at least one of aircraft data and regulatory information on aircraft operation;

a risk layer database (DB) for storing said risk layers (RL1,...,RLn) in said risk layer database (DB);

second data processing means (DP2) for, preferably, automatically and, preferably, repeatedly accessing the risk layer database (DB) during aircraft operation planning and/or during actual aircraft operation to obtain a mission risk map (RMA);

aircraft operation means for operating the aircraft (AC) based on risk information comprised in said mission risk map (RMA), preferably comprising operating the aircraft (AC) to minimize mission risk.

14. The system of claim 13, further comprising at least one aircraft (AC) in communication connection at least with said database (DB) via said aircraft operation means.

15. The system of claim 13 or 14, further adapted to perform the method according to any one of claims 1 through 12.

**Fig. 1**

PARCELS — DLa

ZONING — DLb

TOPOGRAPHY — DLc

WETLANDS — DLd

DEMOGRAPHICS — DLe

LAND COVER — DLf

IMAGERY — DLg

BASEMAP — DLh

**Fig. 2**

Fig. 3

**1** Environment

**2b** Expert knowledge

**2a** Mathematical model

**2c** Vehicle and mission parameters

**3a** Risk metrics

**4** Database generation

**Fig. 4**

**EP 3 901 859 A1**

Europäisches Patentamt
European Patent Office
Office européen des brevets

# EUROPEAN SEARCH REPORT

Application Number

EP 20 17 0891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2015/336668 A1 (PASKO DOUGLAS M [US] ET AL) 26 November 2015 (2015-11-26) <br> * paragraph [0022] - paragraph [0023]; figures 1-5 * <br> ----- | 1-15 | INV. <br> G06Q10/04 <br> G06Q50/28 |
| | | | TECHNICAL FIELDS SEARCHED (IPC) <br><br> G06Q |

The present search report has been drawn up for all claims

| Place of search | Date of completion of the search | Examiner |
|---|---|---|
| Munich | 20 May 2020 | Liendl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 20 17 0891

20-05-2020

| Patent document cited in search report | Publication date | Patent family member(s) | Publication date |
|---|---|---|---|
| US 2015336668 A1 | 26-11-2015 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015336668 A1